# FASCICULE DE BREVET EUROPEEN

(11) **EP 1 841 640 B1**
(45) Date de publication et mention de la délivrance du brevet: **28.10.2009**
(21) Numéro de dépôt: 06709032.4
(22) Date de dépôt: 05.01.2006
(51) Int. Cl.: B62K 21/06

(54) **PERFECTIONNEMENT D'UN DISPOSITIF A ANGLE DE CHASSE REGLABLE D'UNE MOTOCYCLETTE**
VERBESSERUNG FÜR EINE VERSTELLBARE NACHLAUFWINKELVORRICHTUNG FÜR EIN MOTORRAD
IMPROVEMENT TO AN ADJUSTABLE CASTOR ANGLE DEVICE FOR A MOTORCYCLE

(30) Priorité: 07.01.2005 FR 0500133
(43) Date de publication de la demande: 10.10.2007
(73) Titulaire: Lagar, Jean-Paul, 81160 Saint-Juery (FR)
(72) Inventeur: Lagar, Jean-Paul, 81160 Saint-Juery (FR)
(86) Numéro de dépôt international: PCT/FR2006/000015
(87) Numéro de publication internationale: WO 2006/072740

(56) Documents cités:
- FR-A- 2 842 491

## Description

La présente invention concerne un perfectionnement sur un dispositif de fixation du train avant sur le châssis d'une motocyclette, autorisant une modification des paramètres qui définissent les qualités dynamiques du véhicule et notamment l'angle de chasse et la valeur de la chasse au sol, comme d'écrit dans le brevet français N°02 09176 (numéro de publication FR 2842491) déposé le 19 Juillet 2002 au nom du même titulaire.

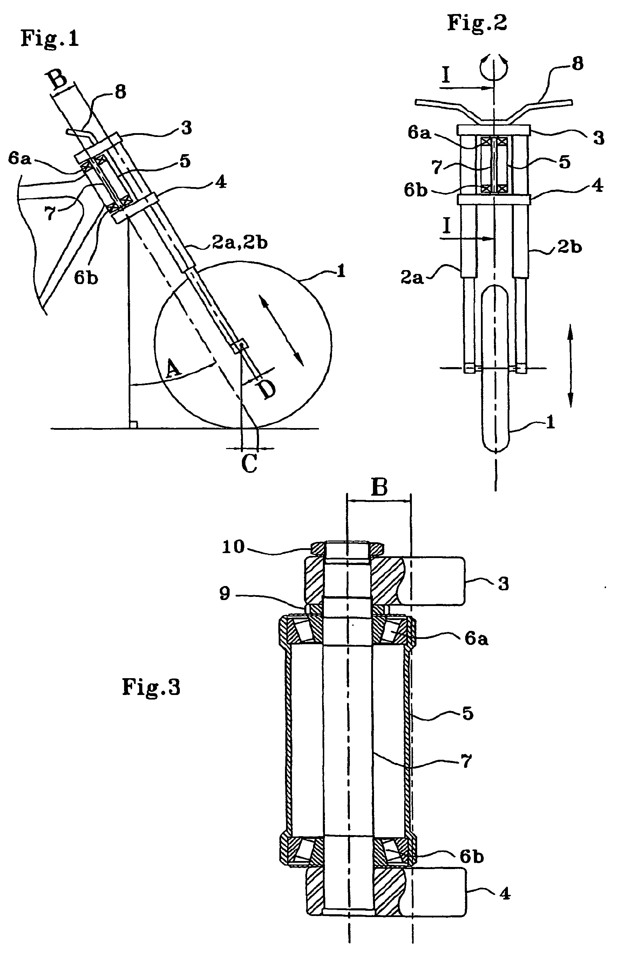

Dans ce brevet français N°02 09176 on a exposé, en référence aux Figure 1, Figure 2 et Figure 3, le mode actuel le plus couramment utilisé par les constructeurs de motocycles pour réaliser la fixation du train avant. La Figure 1 représente un croquis du train avant d'une motocyclette réalisé dans le plan médian de celle-ci. La Figure 2 représente le même croquis mais vu de face. La Figure 3 représente le montage détaillé de la colonne de direction par une coupe 1-1 de la Figure 2 passant par son axe de rotation.

Ainsi la roue avant (1) est, dans la plus grande majorité des constructions, maintenue par l'élément de suspension avant qui est constitué de deux jambes parallèles et télescopiques (2a) et (2b), assurant les fonctions de guidage, de suspension et d'amortissement, et disposées de part et d'autres de la roue, sur son axe de rotation et perpendiculaire à celui-ci. Ces deux éléments sont reliés dans leur partie supérieure par deux platines. Une supérieure (3) est disposée à leur extrémité supérieure et une inférieure (4) est placée au dessous de la supérieure et à une distance qui laisse toute la libertés de mouvement à la roue dans ses oscillations. Ces deux platines enserrent la colonne de direction du châssis.

La colonne de direction est la partie avant du châssis. Elle est constituée d'un tube (5) dans lequel sont disposés, à chaque extrémité, des moyens de guidage (6a) et (6b) permettant le pivotement d'un arbre (7) les traversant le long de l'axe du tube (5). Cet arbre (7) est appelé « axe de colonne de direction ». Il est fixé au milieu de la platine inférieure (4), traverse la colonne de direction du châssis en passant dans les moyens de guidage (6a) et (6b), puis traverse la platine supérieure (3).

Une fonction pivot est ainsi créée entre le châssis et l'ensemble du train avant. A l'aide du guidon (8) fixé sur la platine supérieure (3), le pilote peut changer de direction en faisant pivoter l'ensemble du train avant et donc la roue avant.

La Figure 3 montre une construction couramment utilisée, à titre d'exemple non limitatif, d'un montage de la colonne de direction. Ici, les moyens de guidage (6a) et (6b) sont représentés par des roulements à rouleaux coniques, montés serrés dans les logements de la colonne (5), en opposition et en O. L'écrou (9) permet de régler le jeu nécessaire à la rotation des roulements. Le contre écrou (10) bloque l'ensemble en conservant ce jeu de fonctionnement.

Afin de donner de la stabilité au véhicule, l'axe de pivotement est incliné vers l'avant de manière à ce que l'axe de rotation de la roue avant se trouve en avant de la colonne de direction. L'angle (A) formé par la perpendiculaire au sol et l'axe de pivotement est appelé « angle de chasse ». La distance (C) entre la projection de l'axe de pivotement au sol et le point de contact de la roue au sol est appelé « chasse au sol ».

Dans le brevet français N°02 09176 on a également expliqué l'importance de la valeur de l'angle de chasse et le souhait des utilisateurs, notamment en compétition, de pouvoir modifier rapidement la valeur de cet angle.

L'invention selon le brevet français N°02 09176 propose un ensemble platines supérieure et inférieure et arbre de colonne pouvant se monter facilement sur la colonne (5) des châssis de motocyclette utilisés en série par les constructeurs, qui offre la particularité de pouvoir faire varier l'angle de chasse (A) en plus ou moins de l'ordre de 1° à 3° et le déport (B) de manière indépendante sur les platines supérieure et inférieure. Ces modifications de réglage pouvant s'effectuer rapidement sans démontage du train avant.

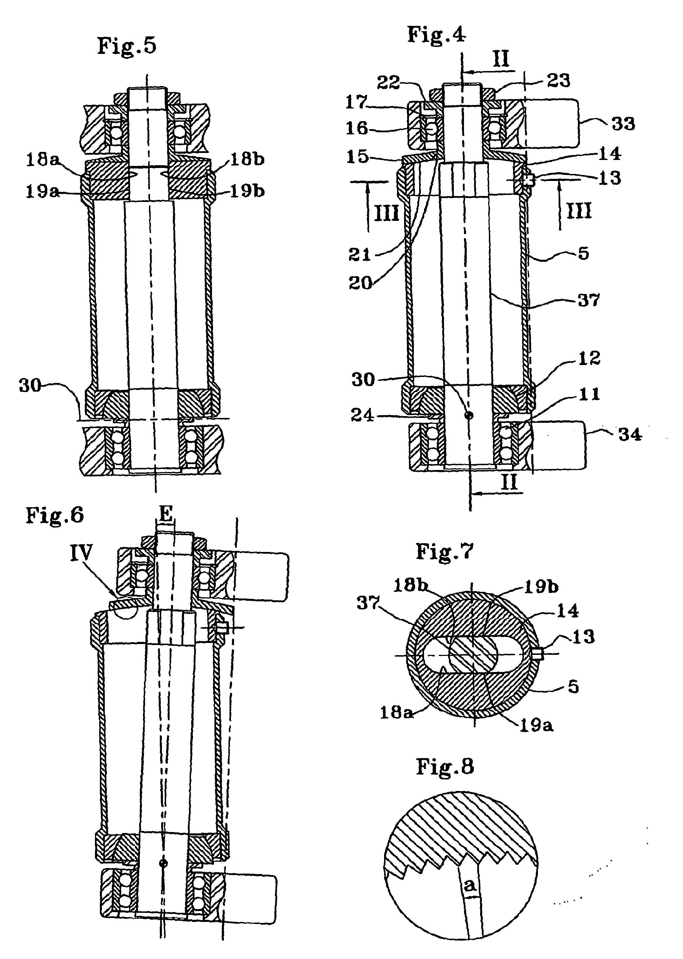

Ainsi, on a exposé en se référant aux Figure 4, Figure 5, Figure 6, Figure 7 et Figure 8 une réalisation de l'invention suivant le brevet français N°02 09176. La Figure 4 est une coupe 1-1 de la Figure 2 du montage de la colonne de direction autorisant le réglage de l'angle de chasse (A), en position milieu. La Figure 5 est une coupe II-II de la Figure 4. La Figure 6 est une coupe identique à la Figure 4 mais dans une position extrême de réglage. La Figure 7 est une section suivant III-III de la Figure 4. La Figure 8 est le détail IV agrandi des surfaces (20) et (21).

Dans ce montage, le tube de colonne (5) du châssis est conservé mais les éléments de guidage (6a) et (6b) de la Figure 3, assurant le pivotement du train avant par rapport au châssis, sont remplacés par respectivement les éléments (16) et (11) placés dans respectivement la platine supérieure (33) et inférieure (34). De cette façon la rotation du train avant est conservée malgré le blocage en rotation de l'axe de colonne (37).

L'axe (37) traverse l'élément de guidage (11) représenté ici à titre d'exemple non limitatif par un roulement à double rangée de billes et fixé de manière appropriée dans la platine (34), comme par exemple non limitatif un emmanchement serré et appui usiné, de façon à supporter les efforts axiaux dirigés vers le haut et transmis par le train avant à travers la platine (34), traverse une rotule à contact oblique (12) disposée en lieu et place de l'élément de guidage (6b) de la Figure 3 dans le tube (5), de manière appropriée et pouvant supporter les efforts axiaux transmis par l'élément (11).

Une entretoise (24) peut être disposée entre les éléments (11) et (12) afin de garantir un espace minimum entre le haut de la platine (34) et le bas du tube (5) pour permettre le mouvement de basculement de la platine (34). Cette entretoise (24) peut être également pourvue de tout moyen d'étanchéité pour protéger les éléments (11) et (12).

Dans sa partie supérieure, l'axe (37) traverse une pièce de guidage (14) fixée en lieu et place de l'élément (6a) de la Figure 3 dans le tube (5), de manière appropriée et à titre d'exemple non limitatif par emmanchement serré et vis pointeau (13) interdisant tout mouvement de rotation de la pièce (14) dans le tube (5). La pièce (14) possède une rainure à flancs parallèles (18a) et (18b). L'axe de cette rainure doit impérativement être disposé dans le plan de la Figure 4, soit plus exactement dans le plan de la Figure 1 qui est le plan médian du véhicule et le plan de définition de l'angle de chasse (A).

Sur l'axe (37) sont réalisé deux méplats à flancs parallèles (19a) et (19b) de dimensions permettant leur coulissement sans jeu sur les flancs respectivement (18a) et (18b) de la rainure de la pièce (14).

La surface supérieure (20) de la pièce (14) est une portion de cylindre d'axe (30) perpendiculaire aux flancs (18a) et (18b) de la rainure et passant par le centre de rotation de la rotule (12). La pièce (15) disposée au-dessus de la pièce (14) possède une surface inférieure (21) cylindrique conjuguée à la surface (20) de sorte que la pièce (15) puisse glisser sur la pièce (14) en pivotant autour de l'axe (30) des surfaces cylindriques. La pièce (15) est percée dans son milieu et perpendiculairement à l'axe (30) de la surface cylindrique pour permettre le passage du haut de l'axe de colonne (37).

L'axe (37) traverse ensuite l'élément de guidage (16), représenté ici à titre d'exemple non limitatif par un roulement rigide à billes, fixé de manière appropriée dans la platine supérieure (33) et notamment par emmanchement serré et circlips de retenu (17), traverse l'entretoise (22) sur laquelle s'appuie un écrou de blocage (23).

Lorsque l'écrou (23) n'est pas serré, il est possible de faire pivoter l'ensemble du train avant autour de l'axe (30), guidé par le glissement des flancs (19a) et (19b) de l'axe (37) sur les flancs (18a) et (18b) de la rainure de la pièce (14) et le glissement de la surface cylindrique (21) de la pièce (15) sur la surface conjuguée (20) de la pièce (14). Une fois positionné à la valeur (E) de la Figure 6 correspondant à la valeur souhaitée de la modification de l'angle de chasse (A), l'écrou (23) est serré de manière appropriée pour bloquer cette position par adhérence des surfaces (20) et (21).

Pour assurer un blocage efficace et éviter tout risque de glissement de la surface (21) sur la surface (20) soumises aux efforts importants transmis par le train avant en phase de freinage ou de compression forte de la suspension, il est avantageux de réaliser un blocage par butée et non par adhérence pure en réalisant de petites rainures sur les surfaces de sorte que la surface (21) engrène parfaitement sur la surface (20) comme représenté sur la Figure 8. Ces rainures sont réalisées sur des lignes parallèles à l'axe (30) des surfaces cylindriques (20) et (21). Elles sont représentées ici à titre d'exemple non limitatif de section triangulaire et autorisent un réglage angulaire par pas (a). Afin de fournir des modifications sensibles sur le comportement du véhicule, il est recommandé de réaliser un pas (a) de l'ordre de 0,2°. Un pas d'une valeur plus importante limite le nombre de crans utilisables car il provoque des modifications du comportement du train avant trop prononcées d'un cran à l'autre. L'utilisation en compétition de l'invention suivant le brevet français N°02 09176 montre que les réglages de plus de l'ordre de 1° ne sont jamais utilisés. Un pas de l'ordre de 0,2° permet d'obtenir de l'ordre de 5 crans de réglage utilisables en plus ou en moins par rapport à la position d'origine, ce qui représente une bonne plage de réglage.

Pour respecter des crans de l'ordre de 0,2° il faut réaliser une denture très petite qui devient délicate à manipuler et surtout vulnérable si elle n'est pas positionnée correctement avant le serrage de l'écrou (23). De plus, ces dentures rendent les pièces (14) et (15) très onéreuses à réaliser.

La présente invention montre un perfectionnement permettant de réaliser un ensemble plus simple de manipulation, avec une plage de réglage correcte et efficace et d'une réalisation plus économique.

Plus précisément, et en se référant aux dessins annexés, donnés à titre d'exemples non limitatifs, où l'on a représenté les différentes réalisations préférées de l'invention, en dehors des Figure 1, Figure 2, Figure 3, Figure 4, Figure 5, Figure 6, Figure 7 et Figure 8 visées précédemment:

La Figure 9 est une coupe 1-1 de la Figure 2 du montage de la colonne de direction autorisant le réglage de l'angle de chasse (A), en position milieu.

La Figure 10 est une coupe V-V de la Figure 9.

La Figure 11 est une section suivant VI-VI de la Figure 9.

La Figure 12 est une section suivant VII-VII de la Figure 10.

La Figure 13 est une coupe identique à la Figure 9 mais dans une position extrême de réglage.

La Figure 14 est une coupe I-I de la Figure 2 du montage de la colonne de direction autorisant le réglage de l'angle de chasse (A), en position milieu et monté de manière inversée au montage de la Figure 10.

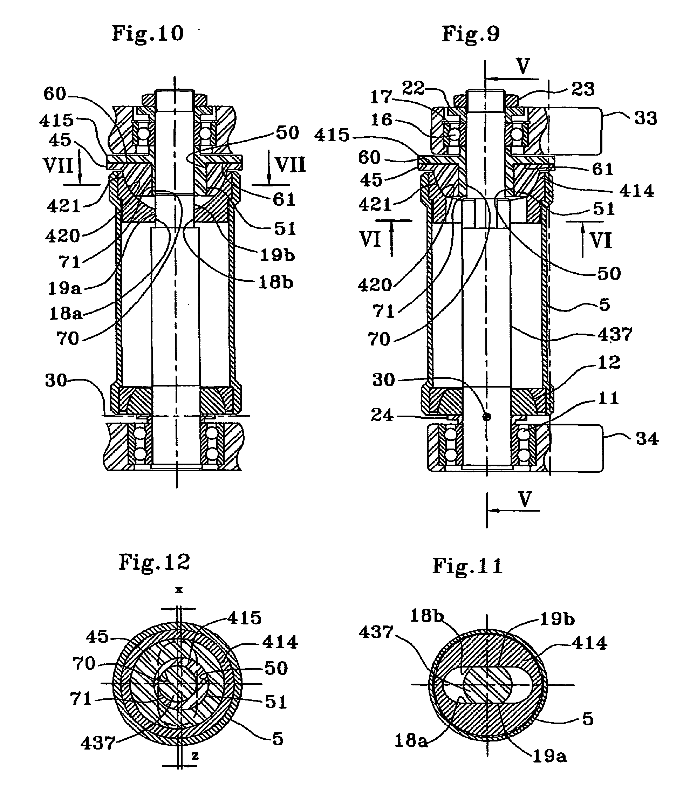

Les Figure 9, Figure 10, Figure 11, Figure 12, Figure 13 et Figure 14 montrent, à titre d'exemple non limitatif, une construction d'un dispositif conforme à l'invention. Dans ce montage, la pièce de guidage (414) possède une surface sphérique concave (420) de centre positionné au dessus de la surface (420) et sur l'axe du tube de colonne (5). Cette pièce de guidage possède toujours une rainure à flancs parallèles (18a) et (18b) d'axe contenu dans le plan médian du véhicule. Cette pièce est fixée de manière approprié et, par exemple non limitatif, par emmanchement serré dans le tube de colonne (5) lui interdisant toute rotation autour de l'axe de ce tube. L'axe (437) possède toujours deux méplats à flancs parallèles (19a) et (19b) de dimensions permettant leur coulissement sans jeu sur les flancs respectivement (18a) et (18b) de la rainure de la pièce (414).

Un excentrique (45) est disposé au dessus de la pièce (414). Cet excentrique est en contact avec la pièce (414) par une surface sphérique convexe (421) de même rayon que celui de la surface (420) de manière à ce que l'excentrique (45) puisse rotuler autour du centre des surfaces sphériques. Cet excentrique (45) possède un alésage (50) d'axe vertical excentré d'une valeur (x) par rapport à l'axe vertical des surfaces sphériques (420) et (421). Le dessus de la pièce (45) est une surface plane (60) perpendiculaire à l'axe de l'alésage (50).

Un deuxième excentrique (415) possède une partie cylindrique (51) de dimension permettant la rotation sans jeu dans l'alésage (50) de l'excentrique (45). Cette pièce possède également une surface plane (61) perpendiculaire à l'axe du cylindre (51) et qui s'appui sur la surface plane (60) de l'excentrique (45). La pièce (415) possède un alésage (70) d'axe excentré par rapport à l'axe du cylindre (51) d'une valeur (z). Par exemple non limitatif, on prendra de préférence des valeurs identiques pour (x) et (z) de l'ordre de 1 à 2 mm comme cela est représenté sur les Figure 9, Figure 10, Figure 12, Figure 13 et Figure 14. L'alésage (70) est dimensionné de manière à permettre la rotation sans jeu de l'excentrique (415) autour de la surface cylindrique (71) de l'axe (437).

Pour obtenir la position milieu des Figure 9 et Figure 10 il faut disposer l'excentration de l'excentrique (45) à l'opposé de celle de l'excentrique (415) comme cela est représenté sur les Figure 10 et Figure 12 car ici les valeurs de (x) et (z) sont identiques. Pour des valeurs différentes les excentrations ne seront pas parfaitement opposées.

A partir de cette position milieu, toute rotation d'angle (g) de l'excentrique (45) effectué dans un sens en même temps qu'une rotation d'angle (g') (si les excentrations (x) et (z) ont des valeurs identiques alors (g) = (g')) de l'excentrique (415) effectué dans le sens inverse, permet d'incliner l'axe (437) et par exemple de diminuer l'angle de chasse. En effectuant les angles inverses à (g) et (g') on incline l'axe (437) dans l'autre sens et donc par exemple on augmente l'angle de chasse. Cette inclinaison est rendue possible par les rotations combinées des deux excentriques (45) et (415) et par le glissement des surfaces sphériques (420) et (421). Avec des valeurs de (x) et (z) de l'ordre de 1 à 2 mm, des rotations d'angles (g) et (g') de l'ordre de 10° à 20°, permettent sur une colonne de direction équipée d'un tube (5) de longueur de l'ordre de 200 mm, de provoquer une inclinaison de l'axe (437) de l'ordre de 0,2°.

Une fois positionné à la valeur (E) souhaitée, le serrage de l'écrou (23) permet de maintenir la position. Malgré les efforts importants rencontrés sur une colonne de direction d'une motocyclette de compétition, une valeur modérée de serrage de l'écrou (23) est nécessaire du fait de l'adhérence des différentes pièces en contact et des faibles bras de levier donnés par les faibles excentrations (x) et (z).

Toutefois, et afin de garantir le positionnement du réglage même lorsque l'écrou (23) n'est pas correctement serré, on prévoit de pouvoir lier les deux excentriques (45) et (415) par une pièce de liaison comme, par exemple non limitatif, un pion (80) traversant les deux pièces et notamment les deux surfaces planes (60) et (61). Ainsi une pluralité de logements effectué sur l'une quelconque des deux pièces (45) et (415) pour recevoir la pièce de liaison permet un réglage par pas défini par l'écart entre ces logements.

II est à noter que le dispositif monté de manière inversé à celui de la Figure 9, permet également le réglage de l'angle de chasse (A). L'écrou de réglage (23) peut également et indépendamment être positionné au dessous de la platine (34).

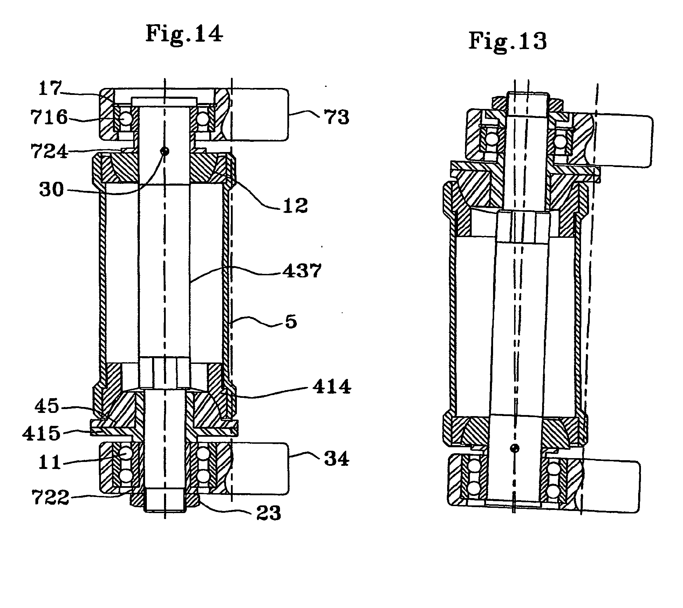

La Figure 14 représente un tel montage où l'élément rotule (12) est monté à la place de l'élément de guidage supérieur (6a), et la pièce de guidage (414) à la place de l'élément de guidage inférieur (6b). Les excentriques (45) et (415) se trouvent alors en dessous de la pièce (414). Ici l'axe de colonne (437) est monté dans le sens inverse de la Figure 9, et l'écrou de serrage (23) est positionné au dessous de la platine (34). L'écrou (23) est en appui sur l'entretoise (722) adapté aux dimensions du roulement (11) et de l'axe (437). La platine (73), le roulement (716) et l'entretoise (724) sont adaptés au montage inversé.

## Revendications

1. Dispositif de fixation du train avant sur le châssis d'une motocyclette comprenant une platine supérieure (33, 73), une platine inférieure (34), un axe de colonne (437) reliant la platine inférieure (34) et la platine supérieure (33, 73) en passant au travers du tube de colonne (5) du châssis, une pièce de guidage (414) et un élément rotule (12) sont placés respectivement ou inversement dans les logements supérieur et inférieur des éléments de guidage (6a) et (6b) du tube de colonne (5), les deux éléments (414) et (12) étant traversés par l'axe de colonne (437), la pièce de guidage (414) possède une rainure à flancs parallèles (18a) et (18b) d'axe contenu dans le plan médian du véhicule, l'axe (437) possède deux méplats à flancs parallèles (19a) et (19b) permettant leur coulissement sans jeu sur les flancs respectivement (18a) et (18b) de la rainure, des éléments tournants (11) et (16, 716) étant placés dans respectivement la platine inférieure (34) et supérieure (33, 73) pour permettre la rotation de ces platines sur l'axe de colonne (437) qui est lui immobilisé en rotation par rapport au tube (5) par la pièce de guidage (414), l'ensemble du train avant peut pivoter autour de l'axe (30) perpendiculaire aux flancs (18a) et (18b) de la rainure et passant par le centre de rotation de la rotule (12), un écrou (23) positionnée à l'une quelconque des deux extrémités de l'axe de colonne (437) permet de bloquer la position de l'axe (437) à la valeur angulaire (E) souhaitée,
**caractérisé en ce que** la pièce de guidage (414) possède une surface sphérique concave (420) de centre positionné au dessus de la surface (420) et sur l'axe du tube de colonne (5), un excentrique (45) est en contact avec la pièce (414) par une surface sphérique convexe (421) de même rayon que celui de la surface (420), l'excentrique (45) possède un alésage (50) d'axe vertical excentré d'une valeur (x) par rapport à l'axe vertical des surfaces sphériques (420) et (421), le dessus de la pièce (45) est une surface plane (60) perpendiculaire à l'axe de l'alésage (50), un deuxième excentrique (415) possède une partie cylindrique (51) de dimension permettant la rotation sans jeu dans l'alésage (50) de l'excentrique (45), cet excentrique (415) possède une surface plane (61) perpendiculaire à l'axe du cylindre (51) et qui s'appui sur la surface plane (60) de l'excentrique (45), la pièce (415) possède un alésage (70) d'axe excentré par rapport à l'axe du cylindre (51) d'une valeur (z), l'alésage (70) est dimensionné de manière à permettre la rotation sans jeu autour de la surface cylindrique (71) de l'axe (437).

2. Dispositif selon la revendication 1, **caractérisé en ce que** toute rotation d'angle (g) de l'excentrique (45) effectué dans un sens en même temps qu'une rotation d'angle (g') de l'excentrique (415) effectué dans le sens inverse, permet d'incliner l'axe (437) et par exemple de diminuer l'angle de chasse, en effectuant les angles inverses à (g) et (g') on incline l'axe (437) dans l'autre sens et donc par exemple on augmente l'angle de chasse.

3. Dispositif selon la revendication 1**, caractérisé en ce que** on choisi de préférence des valeurs identiques pour l'excentration (x) de l'excentrique (45) et l'excentration (z) de l'excentrique (415).

4. Dispositif suivant les revendications 1 à 3, **caractérisé en ce que** les deux excentriques (45) et (415) sont liés par une pièce de liaison comme, par exemple non limitatif, un pion (80) traversant les deux pièces et notamment les deux surfaces planes (60) et (61), pour garantir le positionnement du réglage même lorsque l'écrou (23) n'est pas correctement serré.

5. Dispositif suivant la revendication 4, **caractérisé en ce que** une pluralité de logements effectué sur l'une quelconque des deux pièces (45) et (415) pour recevoir la pièce de liaison (80) permet un réglage par pas défini par l'écart entre ces logements.

## Claims

1. Device for attaching the front wheel assembly to the chassis of a motorcycle that comprises an upper plate (33, 73), a lower plate (34), a column shaft (437) that connects the lower plate (34) and the upper plate (33, 73) by passing through the column hose (5) of the chassis; a guide part (414) and a ball-joint element (12) are placed respectively or inversely in upper and lower housings of the guide elements (6a) and (6b) of the column hose (5), whereby the two elements (414) and (12) are traversed by the column shaft (437); the guide part (414) has a groove with parallel sides (18a) and (18b) with an axis that is contained in the median plane of the vehicle; the shaft (437) has two flat surfaces with parallel sides (19a) and (19b) that make possible their sliding without play on the sides, respectively (18a) and (18b), of the groove, whereby the rotating elements (11) and (16, 716) are placed respectively in the lower plate (34) and upper plate (33, 73) to allow the rotation of these plates on the column shaft (437) that is immobilized therein in rotation relative to the hose (5) by the guide part (414); the front wheel assembly can pivot around the shaft (30) that is perpendicular to the sides (18a) and (18b) of the groove and passes via the center of rotation of the ball-joint (12); a nut (23) positioned at any of the two ends of the column shaft (437) makes it possible to lock the position of the shaft (437) at the desired value (E),
**characterized in that** the guide part (414) has a centrally concave spherical surface (420) that is positioned above the surface (420) and on the shaft of the column hose (5); an eccentric (45) is in contact with the part (414) by a convex spherical surface (421) of the same radius as that of the surface (420); the eccentric (45) has a bore (50) with an eccentric vertical shaft of a value (x) relative to the vertical shaft of the spherical surfaces (420) and (421); the top of the part (45) is a planar surface (60) that is perpendicular to the shaft of the bore (50); a second eccentric (415) has a cylindrical portion (51) of a size that allows the rotation without play in the bore (50) of the eccentric (45); this eccentric (415) has a planar surface (61) that is perpendicular to the shaft of the cylinder (51) and that rests on the planar surface (60) of the eccentric (45); the part (415) has a bore (70) with an eccentric shaft relative to the shaft of the cylinder (51) of a value (z); the bore (70) is sized so as to allow rotation without play around the cylindrical surface (71) of the shaft (437).

2. Device according to claim 1, wherein any rotation of angle (g) of the eccentric (45) that is carried out in one direction at the same time as a rotation of angle (g') of the eccentric (415), carried out in the opposite direction, makes it possible to tilt the shaft (437) and, for example, to reduce the caster angle, by making the reverse angles at (g) and (g'); the shaft (437) is tilted in the other direction and therefore, for example, the caster angle is increased.

3. Device according to claim 1, wherein identical values are preferably selected for the off-centering (x) of the eccentric (45) and the off-centering (z) of the eccentric (415).

4. Device according to claim 1 to 3, wherein the two eccentrics (45) and (415) are linked by one connection part, such as, for example, nonlimiting, a pin (80) passing through the two parts and in particular the two planar surfaces (60) and (61) to ensure the positioning of the adjustment even when the nut (23) is not properly tightened.

5. Device according to claim 4, wherein a number of housings made on any of the two parts (45) and (415) to accommodate the connection part (80) make it possible to make an adjustment by a defined pitch using the difference between these housings.

## Patentansprüche

1. Vorrichtung für die Befestigung des vorderen Fahrwerks am Rahmen eines Motorrads, mit einer oberen Platte (33, 73), einer unteren Platte (34), einer Säulenachse (437), die die untere Platte (34) und die obere Platte (33, 73) durch das Säulenrohr (5) des Rahmens verlaufend verbindet, ein Führungsteil (414) und ein Kugelgelenkelement (12) sind in den oberen bzw. unteren Aufnahmen der Führungselemente (6a) und (6b) des Säulenrohrs (5) oder umgekehrt platziert, wobei die beiden Elemente (414) und (12) durch die Säulenachse (437) durchquert werden, das Führungsteil (414) weist eine Nut mit parallelen Flanken (18a) und (18b) auf, deren Achse sich in der mittleren Ebene des Fahrzeugs befindet, die Achse (437) weist zwei Abflachungen mit parallelen Flanken (19a) und (19b) auf, die ihr spielloses Gleiten auf den Flanken (18a) bzw. (18b) der Nut ermöglichen, wobei die Drehelemente (11) und (16, 716) in der unteren (34) bzw. der oberen (33, 73) Platte positioniert sind, um die Drehung dieser Platten auf der Säulenachse (437) zu ermöglichen, die ihrerseits in der Drehbewegung gegenüber dem Rohr (5) durch das Führungsteil (414) blockiert ist, das gesamte vordere Fahrwerk kann sich um die Achse (30) senkrecht zu den Flanken (18a) und (18b) der Nut durch den Drehpunkt des Kugelgelenks (12) verlaufend drehen, eine an einem beliebigen der beiden Enden der Säulenachse (437) positionierte Mutter (23) ermöglicht die Blockierung der Achsenposition (437) auf den gewünschten Winkelwert (E),
**dadurch gekennzeichnet, dass** das Führungsteil (414) eine konkave sphärische Fläche (420) aufweist, deren Mitte über der Fläche (420) positioniert ist, und auf der Achse des Säulenrohrs (5) ist ein Exzenter (45) durch eine konvexe sphärische Fläche (421) in Berührung mit dem Teil (414) mit demselben Radius wie demjenigen der Fläche (420), und der Exzenter (45) weist eine Bohrung (50) mit vertikaler Achse auf, die gegenüber der Vertikalachse der sphärischen Flächen (420) und (421) um einen Wert (x) exzentrisch versetzt ist, und die Oberseite des Teils (45) ist eine ebene Fläche (60), die zur Bohrungsachse (50) senkrecht ist, ein zweiter Exzenter (415) weist einen zylindrischen Teil (51) auf, dessen Abmessungen die spielfreie Drehung in der Bohrung (50) des Exzenters (45) ermöglicht, dieser Exzenter (415) weist eine ebene Fläche (61) auf, die senkrecht zur Zylinderachse (51) ist und sich auf die ebenen Flächen (60) des Exzenters (45) stützt, das Teil (415) weist eine Bohrung (70) mit exzentrischer Achse gegenüber der Zylinderachse (51) mit einem Wert (z) auf, und die Bohrung (70) ist so dimensioniert, dass die spielfreie Drehung um die zylindrische Fläche (71) der Achse (437) ermöglicht wird.

2. Vorrichtung nach Anspruch 1, **dadurch gekennzeichnet, dass** die gesamte Winkeldrehung (g) des Exzenters (45), die in einer Richtung gleichzeitig mit einer Winkeldrehung (g') des Exzenters (415) in der umgekehrten Richtung erfolgt, die Neigung der Achse (437) ermöglicht, und beispielsweise die Verringerung des Nachlaufwinkels, und durch die Ausführung der umgekehrten Winkel von (g) und (g') wird die Achse (437) in der anderen Richtung geneigt, so dass man beispielsweise den Nachlaufwinkel erhöht.

3. Vorrichtung nach Anspruch 1, **dadurch gekennzeichnet, dass** vorzugsweise identische Werte für die Exzentrizität (x) des Exzenters (45) und die Exzentrizität (z) des Exzenters (415) gewählt werden.

4. Vorrichtung nach den Ansprüchen 1 bis 3, **dadurch gekennzeichnet, dass** die beiden Exzenter (45) und (415) durch ein Verbindungsstück verbunden sind, wie als nicht erschöpfendes Beispiel einen Stift (80), der die beiden Teile und insbesondere die beiden ebenen Flächen (60) und (61) durchquert, um die Positionierung der Einstellung sicherzustellen, selbst wenn die Mutter (23) nicht richtig angezogen ist.

5. Vorrichtung nach Anspruch 4, **dadurch gekennzeichnet, dass** eine Vielfalt von Aussparungen, die an einem beliebigen der beiden Teile (45) und (415) vorgenommen werden, um das Verbindungsstück (80) aufzunehmen, eine Einstellung durch Schritte ermöglichen, die durch den Abstand zwischen diesen Aussparungen definiert sind.
